(19) Europäisches Patentamt
European Patent Office
Office européen des brevets

(11) Veröffentlichungsnummer: **0 466 183 B1**

# (12) EUROPÄISCHE PATENTSCHRIFT

(45) Veröffentlichungstag der Patentschrift: **20.09.95**

(51) Int. Cl.[6]: **C07F 7/21**, C09K 19/40

(21) Anmeldenummer: **91111663.0**

(22) Anmeldetag: **12.07.91**

## (54) Cyclosiloxane mit mesogenen Seitengruppen.

(30) Priorität: **12.07.90 DE 4022151**

(43) Veröffentlichungstag der Anmeldung:
**15.01.92 Patentblatt 92/03**

(45) Bekanntmachung des Hinweises auf die Patenterteilung:
**20.09.95 Patentblatt 95/38**

(84) Benannte Vertragsstaaten:
**CH DE FR GB LI**

(56) Entgegenhaltungen:
**EP-A- 0 060 335**
**EP-A- 0 241 247**
**EP-A- 0 333 022**
**EP-A- 0 431 466**

**JOURNAL OF THE CHEMICAL SOCIETY, CHEMICAL COMMUNICATIONS, Nr. 2, 15. Januar 1990, Seiten 95-97, Cambridge, GB R.D.C.Richards et al:" Liquid crystallinecyclic polymers"**

**CHEMICAL ABSTRACTS, Band 97, 1982, Seite 787, Zusammenfassung Nr. 227612c,Columbus, Ohio, US; & JP-A-82 56 820 (HITACHI LTD) 05-04-1982**

(73) Patentinhaber: **Consortium für elektrochemische Industrie GmbH**
**Zielstattstrasse 20**
**D-81379 München (DE)**

(72) Erfinder: **Häberle, Norman, Dr.**
**Willibaldstrasse 51a**
**W-8000 München 21 (DE)**
Erfinder: **Haas, Wolfgang, Dr.**
**Augsburger Strasse 16**
**W-8034 Germering (DE)**
Erfinder: **Kreuzer, Franz-Heinrich, Dr.**
**Josef-Gerstner-Strasse 14d**
**W-8033 Martinsried (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

**CHEMICAL ABSTRACTS, Band 102, 1985, Seite 13, Zusammenfassung Nr. 149979h,Columbus, Ohio, US; & SU-A-1 126 579 (INSTITUTE OF HETEROORGANICCOMPOUNDS, ACADEMY OF SCIENCES, U.S.S.R. etc.) 30-11-1984**

**CHEMICAL ABSTRACTS, Band 111, 1989, Seite 593, Zusammenfassung Nr. 47953p,Columbus, Ohio, US; R. ORTLER et al.: "Reversible holographic-optical datastorage in cholesteric liquid-crystalline siloxanes",& MAKROMOL. CHEM., RAPID COMMUN. 1989, 10(4), 189-94**

## Beschreibung

Die vorliegende Erfindung betrifft Organocyclosiloxane mit mesogenen Seitenketten, vorzugsweise solche, welche flüssigkristalline Phasen ausbilden können.

### Stand der Technik

Flüssigkristalline Verbindungen sind u.a. durch B. D. Demus, H. Demus und H. Zaschke (Flüssige Kristalle in Tabellen, 1974; D. Demus und H. Zaschke, Flüssige Kristalle in Tabellen II, 1984, VEB-Verlag Leipzig) bekannt. Dort sind auch mesogene Gruppen beschrieben, d.h. Gruppen, deren Anwesenheit in einem Molekül Anlaß zum Auftreten von flüssigkristallinen Phasen geben können.

Organocyclosiloxane mit mesogenen Seitengruppen sind grundsätzlich bekannt. In US-A-4 410 570 (ausgegeben am 18. 10. 1983, F.-H. Kreuzer et al., Consortium für elektrochemische Industrie GmbH) sind flüssigkristalline Organocyclosiloxane beschrieben, deren mesogene Gruppen über eine Propylenoxygruppe an das jeweilige Siliciumatom gebunden sind. Sie wurden hergestellt durch Addition von Allyloxybenzoaten an ein Si-gebundene Wasserstoffatome enthaltendes Cyclosiloxan. Solche Siloxane neigen zur Abspaltung von Propen. Dadurch entstehen SiO-C-Bindungen, die hydrolytisch nicht stabil sind.

Aus EP-A-333 022 sind Organocyclosiloxane mit mesogenen Seitengruppen bekannt, welche chromophore Gruppen enthalten, welche über eine Propylenoxygruppe an ein Siliciumatom gebunden sind.

In J. of the Chem. Soc., Chem. Comm., No.2, Seiten 95 bis 97 sind flüssigkristalline Organocyclosiloxane und deren Phasenverhalten beschrieben, bei denen mesogene Gruppen über eine Pentylenoxygruppe an das jeweilige Siliciumatom gebunden sind.

EP-A-241 247 beschreibt flüssigkristalline Organocyclosiloxane mit mesogene Gruppen die über eine Propylenoxygruppe an das jeweilige Siliciumatom gebunden sind.
In Chemical Abstracts, Band 97, No.227612c & JP-A-8256820 und Chemical Abstracts, Band 102, No.149979h & SU-A-1126579 sind Organocyclosiloxane beschrieben, die direkt an Siliciumatome gebundene Phenylreste aufweisen.
EP-A-431 466 war am Prioritätstag der vorliegenden Anmeldung noch nicht veröffentlicht. Dort sind Organocyclosiloxane mit Si-gebundenen Resten beschrieben, welche Donor/Acceptor-$\pi$-Elektronensysteme aufweisen.

### Aufgabe

Aufgabe der vorliegenden Erfindung war es, weitere Substanzen mit mesogenen Seitengruppen, insbesondere mit flüssigkristallinen Eigenschaften bereitzustellen, welche sich leicht orientieren lassen. Ferner war es Aufgabe der vorliegenden Erfindung, Substanzen der oben genannten Art zur Verfügung zu stellen, welche chemisch stabil sind.

### Beschreibung

Die vorstehend geschilderten Aufgaben werden durch die vorliegende Erfindung gelöst durch Organocyclosiloxane der Formel (5)

$[RXSiO]_n$ (5),

welche mindestens eine an ein Siliciumatom gebundene Gruppe der Formel (1) enthalten

$-(CH_2)_x-R''-[-L-A-]_y-(L)_z-T$ (1),

worin

- **X** gleiche oder verschiedene Reste der Bedeutung von R oder Reste der Formel (1),
- **n** eine ganze Zahl im Wert von mindestens 3,
- **x** eine ganze Zahl im Wert von mindestens 2, vorzugsweise von 2 bis 10,
- **R''** eine chemische Bindung oder einen zweiwertigen Rest der Formel -COO-, -OOC-, $-CH_2-CH_2-$, -CH = CH-, -C≡C-, -CH = N-, -N = CH- oder $-Si(R)_2-$, wobei die Reste
- **R** gleiche oder verschiedene, gegebenenfalls substituierte Kohlenwasserstoffreste mit 1 bis 18 Kohlenstoffatomen sind,
- **L** jeweils gleiche oder verschiedene, gegebenenfalls durch mindestens einen Rest Q in 2-, 3-, 5-

und/oder 6-Stellung substituierte 1,4-Phenylen- oder 1,4-Cyclohexylenreste, 2,5- oder 3,6-Pyridindiyl-, 2,5-Pyrimidindiyl-, 2,5-Pyridazindiyl-, 2,5-Triazindiyl-, 3,6-Tetrazindiyl-, 2,5-Dioxandiyl-, 2,5-Tetrahydrofurandiyl-, 1,3,4-Thiadiazol-2,5-diyl-, 1,4-Bicyclo[2.2.2]-octandiylreste,

**Q** gleiche oder verschiedene Reste, nämlich Wasserstoff-, Fluor- oder Chloratome, Cyano-, Methyl- oder Trifluormethylgruppen,

**A** gleiche oder verschiedene zweiwertige Reste der Bedeutung **R''** oder der Formel $-CH_2-O-$ oder $-O-CH_2-$, $-CH_2-CH_2-$, $-CH=N-$ oder $-N=CH-$,

**y** eine ganze Zahl im Wert von 0 bis 10, vorzugsweise von 0 bis 2,

**z** eine ganze Zahl im Wert von 0 bis 10, vorzugsweise von 0 bis 2,

mit der Maßgabe, daß die Summe **y+z** mindestens 1 beträgt,

**T** einen Cholesterylrest oder einen gegebenenfalls substituierten Kohlenwasserstoffrest mit 1 bis 18 Kohlenstoffatomen, wobei die gegebenenfalls vorhandenen Substituenten vorzugsweise Halogenatome, Cyanogruppen, Nitrogruppen und/oder Kohlenwasserstoffoxygruppen mit 1 bis 10 Kohlenstoffatomen sind.

Der Begriff "mindestens eine an ein Siliciumatom gebundene Gruppe der Formel (1)" bedeutet, daß die Gruppe der Formel (1) direkt an ein Siliciumatom des Cyclosiloxans gebunden ist.

Vorzugsweise ist der Rest **L** ein 1,4-Phenylenrest.

Bevorzugt als Reste der Formel (1) sind solche der Formel (2):

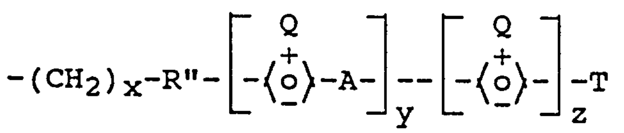

(2),

worin

**x**, **y**, **z**, **R''**, **Q**, **A** und **T** die zu Formel (1) angegebenen Bedeutungen haben.

Vorzugsweise sind alle Reste **X** in der obigen Formel (5) Reste der Formel (1).

Beispiele für Reste **R** sind Alkylreste, wie der Methyl-, Ethyl-, n- Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Oktadecylreste, wie der n-Oktadecylrest; Cycloalkylreste, wie Cyclopentyl-, Cyclohexyl-, Cycloheptylreste und Methylcyclohexylreste; Arylreste, wie der Phenyl- Naphthyl- und Anthryl- und Phenanthrylrest; Alkarylreste, wie o-, m-, p-Tolylreste, Xylylreste und Ethylphenylreste; Aralkylreste, wie der Benzylrest, der alpha- und der $\beta$-Phenylethylrest;

Beispiele für substituierte Reste **R** sind Cyanalkylreste, wie der $\beta$-Cyanethylrest, und halogenierte Kohlenwasserstoffreste, beispielsweise Halogenalkylreste, wie der Trifluormethylrest, 3,3,3-Trifluor-n-propylrest und Halogenarylreste, wie der o-, m-, und p-Chlorphenylrest.

Vorzugsweise bedeutet **R** in den obigen Formeln (1), (2) oder (5) und in den nachstehenden Formeln jeweils einen gleichen oder verschiedenen $C_1$- bis $C_8$-Alkyl-, Aryl-, Aralkyl-, Alkaryl- oder Cycloalkylrest, insbesondere Methyl-, Ethyl-, n-Propyl-, oder Phenylrest. Insbesondere sind mindestens 80 % der Reste R, speziell alle Reste R Methylreste.

Vorzugsweise sind in Formel (5) alle Reste X Reste der Formel (1), insbesondere der Formel (2).

Vorzugsweise ist **x** in den obigen und nachstehenden Formeln eine ganze Zahl im Wert von 3 bis 12, insbesondere von 3 bis 9, speziell von 3 bis 6.

Vorzugsweise bedeuten die Reste **Q** gleiche oder verschiedene Reste, nämlich Wasserstoff- Chlor- oder Fluoratome oder Cyanoreste, insbesondere Wasserstoffatome.

Bevorzugt als Reste **T** sind Cholesterylreste, sowie Reste der Formeln

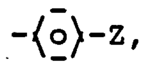 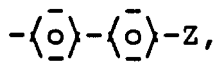 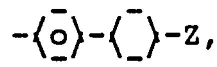

(6) (7) (8)

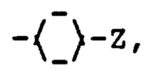 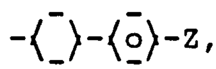 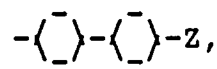

(9) (10) (11)

worin

**Z** gleiche oder verschiedenen Reste, nämlich Wasserstoffatome, Halogenatome, Cyano-, Nitro-, $C_1$- bis $C_6$-Alkyl- und $C_1$- bis $C_6$-Alkoxyreste bedeuten.

Besonders bevorzugt als Reste der Formel (1) oder (2) bzw. als Reste X sind solche der Formel (12):

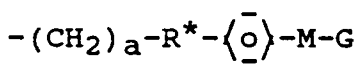 (12),

worin

**a** eine gleiche oder verschiedene ganze Zahl im Wert von 2 bis 6,

**R*** einen gleichen oder verschiedenen zweiwertigen Rest, nämlich eine chemische Einfachbindung, einen Rest der Formel -OOC-, $-Si(CH_3)_2-$,

**M** einen gleichen oder verschiedenen Rest der Formel -OOC-, -COO-, -N = CH- oder -CH = N-,

**G** einen Cholesterylrest oder einen gegebenenfalls in 4-Stellung durch ein Halogenatom, einen Cyanorest, eine $C_1$- bis $C_4$-Alkyl- oder Alkoxygruppe substituierten Phenyl- oder Biphenylrest,

bedeuten.

Unter den erfindungsgemäßen Cyclosiloxanen sind insbesondere Organocyclosiloxane der Formel (13) bevorzugt:

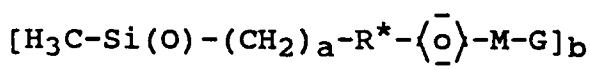 (13),

worin

**b** eine ganze Zahl im Wert von 3 bis 6 ist

und **a**, **R***, **M** und **G** die unter Formel (12) angegebenen Bedeutungen haben, mit der Maßgabe, daß in Formel (13) für **b-1** Reste der Formel (12) der Rest **R*** auch ein Rest der Formel -O- sein kann.

Soweit es die Struktur erlaubt, sind unter die beanspruchten Verbindungen auch deren Diastereomere und optische Isomere zu zählen, also insbesondere die einzelnen Enantiomere und deren Mischungen, beispielsweise die entsprechenden Racemate.

Verfahren

Verfahren 1

Die erfindungsgemäßen Cyclosiloxane mit mesogenen Seitengruppen können hergestellt werden durch Umsetzung von cyclischem Siloxan mit mindestens einem direkt an Silicium gebundenem Wasserstoffatom mit Verbindung der Formel (14) bzw. (15):

$H_2C = CH-(CH_2)_{(x-2)}-R''-[-L-A-]_y-(L)_z-T$ (14),

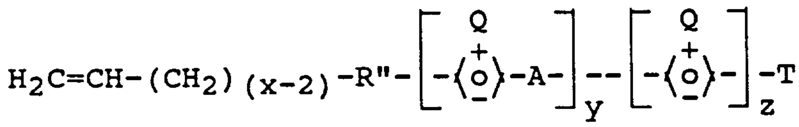 (15),

vorzugsweise in Gegenwart von mindestens einem Metall der Platingruppe und/oder dessen Verbindungen, wobei in den oben genannten Formeln (14) und (15) R", L, A, T, x, y, z und Q die oben unter Formel (1) angegebenen Bedeutungen haben.

Das im erfindungsgemäßen Verfahren eingesetzte cyclische Siloxan mit mindestens einem direkt an Silicium gebundenem Wasserstoffatom ist vorzugsweise eines der Formel

$[RGSiO]_n$ (19),

worin

**G** gleiche oder verschiedene Reste der Bedeutung von **R** oder direkt an Siliciumatome gebundene Wasserstoffatome sind, mit der Maßgabe, daß **q** Reste **X** pro Molekül direkt an Siliciumatome gebundene Wasserstoffatome sind,

**q** eine ganze Zahl von 1 bis **n** ist und

R und n die oben unter Formel (5) angegebenen Bedeutungen haben.

Besonders bevorzugt als Cyclosiloxane der Formel (19) sind solche der Formel (20):

$[RHSiO]_n$ (20).

Beispiel für Metalle der Platingruppe und/oder deren Verbindungen - nachfolgend Platinkatalysator genannt - , die das erfindungsgemäße Verfahren beschleunigen können, sind Platin, Palladium, Rhodium, Iridium und deren Verbindungen, vorzugsweise Platin und/oder dessen Verbindungen. Es können hier alle Katalysatoren eingesetzt werden, die auch bisher zur Addition von direkt an Si-Atome gebundenen Wasserstoffatomen an aliphatisch ungesättigte Verbindungen eingesetzt wurden. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z. B. $PtCl_4$, $H_2PtCl_6 . 6H_2O$, $Na_2PtCl_4 . 4H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6 . 6H_2O$ und Cyclohexanon, Platin-Vinylsiloxankomplexe, insbesondere Platin-Divinyltetramethyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin, oder Ammonium-Platinkomplexe gemäß EP-B 110 370.

Platinkatalysator wird vorzugsweise in Mengen 0,02 bis 50 Molprozent, jeweils berechnet als elementares Platin und bezogen auf die Molzahl derjenigen Reaktionskomponente - also den Verbindung(en) der Formel (14) bzw. (15) bzw. der cyclischen Siloxane mit mindestens einem direkt an Silicium gebundem Wasserstoffatom - welche im Unterschuß oder in stöchiometrischer Menge vorliegt.

Die Reaktion wird vorzugsweise bei Temperaturen von 0 °C bis 150 °C, vorzugsweise bei Drücken von 0,05 MPa bis 2,0 MPa durchgeführt.

Sollte das Cyclosiloxan, also vorzugsweise solches der Formel (19) oder (20), oder die Verbindung der Formel (14) bzw. (15) sehr reaktionsträge sein, kann auch bei höheren Temperaturen, höheren Drücken und in Anwesenheit von mehr Platinkatalysator gearbeitet werden.

Vorzugsweise wird die Reaktion in einem Lösungsmittel durchgeführt, welches insbesondere aprotisch sein sollte;Lösungsmittel oder Lösungsmittelgemische mit einem Siedepunkt bzw. Siedebereich von bis zu 160 °C, insbesondere von bis zu 120 °C bei jeweils 0,1 MPa (abs.) sind bevorzugt. Beispiele für Lösungsmittel sind Ester, wie Methylacetat, Ethylacetat, n- und iso-Propylacetat, n-, sec.- und t.-Butylacetat, Ethylformiat und Diethylcarbonat; Ether, wie Dioxan, Tetrahydrofuran, Diethylether, Di-n-propylether, Diisopropylether, Di-n-butylether, Ethylenglycolmonomethylether, Ethylenglycolmonoethylether, Diethylenglycoldimethylether und Anisol; chlorierte Kohlenwasserstoffe, wie Dichlormethan, Trichlormethan, Tetrachlormethan, 1,2-Dichlorethan, Trichlorethylen, Tetrachlorethylen und Chlorbenzol; Kohlenwasserstoffe, wie Pentan, n-Hexan, Hexan-Isomerengemische, Cyclohexan, Heptan, Oktan, Waschbenzin, Petrolether, Benzol, Toluol,

Xylole; Ketone, wie Aceton, Methylethylketon, Methylisobutylketon; oder Gemische dieser Lösungsmittel.

Die Bezeichnung Lösungsmittel bedeutet nicht, daß sich alle Reaktionskomponenten in diesem lösen müssen. Die Reaktion kann auch in einer Suspension oder Emulsion eines oder mehrerer Reaktionspartner durchgeführt werden . Die Reaktion kann auch in einem Lösungsmittelgemisch mit einer Mischungslücke ausgeführt werden, wobei in jeder der Mischphasen jeweils mindestens ein Reaktionspartner löslich ist.

Vorzugsweise wird cyclisches Siloxan mit mindestens einem direkt an Silicium gebundenem Wasserstoffatom - vorzugsweise solches der Formel (19) oder (20) - im Vergleich zu Verbindung der Formel (14) bzw. (15) im erfindungsgemäßen Verfahren im Molverhältnis 1:2 bis 2:1, insbesondere von 1:1,1 bis 1,1:1 eingesetzt.

Herstellung von Verbindungen der Formel (14) und (15):

Verfahren zur Herstellung von Ausgangsverbindungen der Formel (14) und (15) bzw. von deren Zwischenprodukte sind in DE-A-39 35 638 beschrieben. Beispielsweise kann der Alkenylrest eingeführt werden durch Umsetzung der entsprechenden Alkenylhalogenide mit entsprechenden metallorganischen Benzolderivaten, insbesondere den Grignardverbindungen und Organolithiumverbindungen. Bevorzugte Beispiele für solche Benzolderivate sind 4-Halogenbenzolmagnesiumhalogenide. Die Umsetzung von Alkenylhalogenid mit Benzolderivat erfolgt vorzugsweise in einem inerten Lösungsmittel(gemisch), beispielsweise Diethylether, Methyl-t.-butylether, Tetrahydrofuran, 1,4-Dioxan, Kohlenwasserstoffe und deren Gemische, wie Benzol, Toluol, Xylole, Hexanisomerengemische oder Petrolether. Die Umsetzung wird vorzugsweise bei Temperaturen von -100 °C bis +110 °C, insbesondere bei Drücken von 0,09 bis 0,11 MPa (abs.) durchgeführt. Die Reaktion kann unter Umständen durch Ultraschall beschleunigt werden.

So hergestellte 4-(ω-Alkenyl)-1-halogenbenzole können in bekannter Weise u.a. ein zweites Mal mit Magnesium zu den entsprechenden Organomagnesiumhalogeniden und anschließend mit $CO_2$ zu 4-(ω-Alkenyl)benzoesäuren und schließlich zu den entsprechenden Cholesteryl- oder gegebenenfalls substituierten Phenylestern umgesetzt werden (**A = -COO-** in Formel (14) bzw. (15) ). Eine Liste derart herstellbarer 4-(ω-Alkenyl)benzoesäureester ist in Tabelle 1 aufgeführt.

4-ω-Alkenylphenolderivate können erhalten werden durch Umsetzung von 4-ω-Alkenylmagnesiumhalogeniden mit an der Hydroxylgruppe geschützten 4-Halogenphenolen, gegebenenfalls unter Katalyse von Dilithiumtetrachlorocuprat. Die so erhältlichen Phenole können mit entsprechenden Säuren oder Säurederivaten verestert werden (**A = -OOC-** in Formel (14) bzw. (15) ). Beispiele für entsprechend herstellbare Phenolester sind in Tabelle 2 aufgeführt.

Durch Umsetzung von 4-(ω-Alkenyl)phenylmagnesiumhalogeniden (herstellbar wie oben erläutert) mit N,N-Dimethylformamid sind 4-(ω-Alkenyl)benzaldehyde zugänglich, welche wiederum mit primären Aminen - beispielsweise mit den käuflich erhältlichen 4-Alkylanilinen - zu den entsprechenden Azomethinen (Schiff'schen Basen) reagieren (**A = -CH=N-** in Formel (14) bzw. (15) ). Auf diese Weise wurde hergestellt N-[4-(3-Butenylphenyl)benzyliden]-4-butylphenylimin (Siedepunkt bei 2 Pa: 170 °C).

Setzt man die nach obenstehendem Verfahren herstellbaren 4-(ω-Alkenyl)benzaldehyde mit geeigneten Derivaten, beispielsweise Alkanphosphonsäureester (Wittig-Horner-Reaktion), um, so erhält man 4-(ω-Alkenyl)phenylethylendiylderivate (**A = -CH=CH-** in Formel (14) bzw. (15) ).

Alle Herstellungsverfahren dieser und weiterer Verbindungen der Formel (14) und (15) sowie der unter Verfahren 2 angeführten Ausgangsstoffen sind bekannt und beispielsweise in Houben-Weyl, Methoden der organischen Chemie, Georg Thieme Verlag, Stuttgart und New York, beschrieben.

Die in Verfahren 1 eingesetzten cyclischen Siloxane mit mindestens einem direkt an Silicium gebundem Wasserstoffatom sind teilweise bei der Firma Petrarch Systems (vertreten durch ABCR GmbH & Co. KG, D-7500 Karlsruhe) käuflich. Ihre Herstellung ist u.a. in US-A-2 389 806 und von R. O. Sauer et al. (Journal of the American Chemical Society 68, 962 (1946) ) beschrieben. Eine Übersicht über Siloxane und deren Herstellung gibt W. Noll in "Chemistry and Technology of Silicones", Academic Press Inc., Orlando, 1968.

Verfahren 2

Die erfindungsgemäßen Cyclosiloxane mit mesogenen Seitengruppen können hergestellt werden durch Umsetzung von cyclischem Siloxan mit mindestens einer direkt an Silicium gebundenen Alkenylgruppe der Formel

$$-(CH_2)_{(x-2)}-CH=CH_2 \qquad (16)$$

mit Verbindung der Formel (17) bzw. (18)

$H\text{-}R''\text{-}[\text{-}L\text{-}A\text{-}]_y\text{-}(L)_z\text{-}T$ (17),

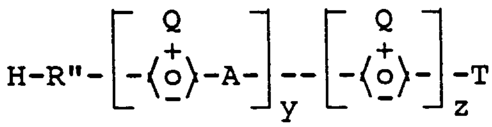 (18),

vorzugsweise in Gegenwart von mindestens einem Metall der Platingruppe und/oder dessen Verbindungen, wobei in den oben genannten Formeln (16), (17) und (18) L, A, T, x, y, z und Q die oben unter Formel (1) angegebenen Bedeutungen haben.

In den Formeln (17) und (18) ist R'' jeweils eine Gruppe der Formel $-Si(R)_2-$, insbesondere der Formel $-Si(CH_3)_2-$, wobei R die unter Formel (1) angegebene Bedeutung hat.

Die zu Verfahren 1 gemachten Angaben über weitere Komponenten in der Reaktionsmischung, wie Platinkatalysator und Lösungsmittel, über Mengenverhältnisse der Komponenten, Druck und Temperatur gelten für Verfahren 2 entsprechend.

Vorzugsweise hat x in der obigen Formel (16) den Wert 0 oder 1, insbesondere 0. Eingesetzt als cyclische Siloxane mit mindestens einer direkt an Silicium gebundenen Alkenylgruppe der Formel (16) werden also vorzugsweise cyclische Siloxane mit Vinyl- und/oder Allylgruppen, insbesondere solche mit Vinylgruppen.

Cyclosiloxane mit Methyl- und Vinylgruppen lassen sich beispielsweise durch Hydrolyse von Vinylmethyldichlorsilan oder Cohydrolyse dieses Silans mit Dimethyldichlorsilan in einem Wasser/Tetrahydrofuran-Gemisch und anschließender fraktionierender Destillation darstellen.

Die Herstellung von 4-Dimethylsilylchlorbenzol, der entsprechenden Grignard-Verbindung und der nach Umsetzung mit $CO_2$ daraus hergestellten 4-Dimethylsilylbenzoesäure bzw. des Säurechlorids ist in US-A-4 914 221 beschrieben. Sie geht aus von 1,4-Dichlorbenzol,dessen Umsetzung mit Magnesium zu 4-Chlorbenzolmagnesiumchlorid und dessen Reaktion mit Trichlorsilan.

Analog den oben zu Verfahren 1 unter der Überschrift "Herstellung von Verbindungen der Formel (14) und (15):" gemachten Angaben lassen sich aus 4-Dimethylsilyl-1-chlorbenzol Verbindungen der Formeln (17) bzw. (18) darstellen.

In allen vorstehend geschilderten Verfahren und Verfahrensschritten kann jede in der Reaktionsmischung enthaltene Verbindung einzeln oder im Gemisch eingesetzt werden. Es kann also beispielsweise jeweils ein Reaktand einer oben angegebenen Formel oder ein Reaktand, der einen Rest einer der oben angegebenen Formeln trägt, eingesetzt werden, es kann aber auch ein Gemisch von mindestens zwei solcher Reaktanden eingesetzt werden. Es kann ein Lösungsmittel, falls erwünscht, es kann ein Katalysator, soweit erforderlich, eingesetzt werden, es kann aber auch ein Lösungsmittelgemisch und/oder ein Katalysatorgemisch eingesetzt werden.

## Verwendung

Die erfindungsgemäßen bzw. erfindungsgemäß herstellbaren cyclischen Siloxane mit mesogenen Seitenketten können in Anzeigevorrichtungen verwendet werden, besonders in Anzeigevorrichtungen, welche unter Verwendung von smektischen Flüssigkristall(mischungen) hergestellt werden. Dabei können die reinen erfindungsgemäßen Verbindungen, deren Mischungen und insbesondere Mischungen der erfindungsgemäßen cyclischen Siloxane mit (anderen) Flüssigkristallen verwendet werden. Die erfindungsgemäßen Verbindungen eignen sich zur Herstellung von nematischen, cholesterischen und smektischen Gemischen, vor allem für Gemische, welche eine smektische C-Phase ausbilden können. Sie können aber auch als Zusätze zu nematischen, smektischen oder cholesterischen Phasen Verwendung finden. Mit Hilfe der erfindungsgemäßen cyclischen Siloxane lassen sich sowohl flüssigkristalline Basismischungen herstellen als auch die Eigenschaften bereits fertiggestellter Basismischungen - wie beispielsweise die optische Anisotropie, die elektrische Anisotropie, die spontane Polarisation, die Viskosität, der Tiltwinkel, der Pitch und das Phasenverhalten - günstig verändern.

Der Anteil der erfindungsgemäßen cyclischen Siloxane mit mesogenen Seitengruppen in Flüssigkristallmischungen kann je nach Verwendungszweck in breiten Grenzen variieren. Er kann beispielsweise von 1 Gewichtsprozent bis zu 100 Gewichtsprozent betragen.

In den nachfolgenden Tabellen und Beispielen sind, falls jeweils nicht anders angegeben,

a) alle Mengenangaben auf das Gewicht bezogen;

b) alle Drücke 0,10 MPa (abs.);

c) alle Temperaturen 20° C .

Die Phasenbeschreibungen sind wie folgt abgekürzt dargestellt:

d) Die Zahlenwerte bedeuten Übergangstemperaturen, gemessen in °C;

e) Die Phasentypen sind wie folgt charakterisiert:

| | |
|---|---|
| i : | isotrope Phase, |
| n : | nematische Phase, |
| ch : | cholesterische Phase, |
| sA : | smektische A-Phase, |
| sC : | smektische C-Phase, |
| sC* : | chirale smektische C-Phase, |
| sB : | smektische B-Phase, |
| s : | smektischer Zustand, dessen Typ nicht bestimmt wurde, |
| k : | kristallin, |
| G : | Glaszustand. |

f) Phasenbeschreibungen in Klammern zeigen unterkühlbare Phasen an.

Tabelle 1

**Ausgangsstoffe der Formel (14) bzw. (15):**
**4-(ω-Alkenyl)benzoesäureester**

4-Allylbenzoesäurecholesterylester K 139 Chol 203 I

4-(3-Butenyl)benzoesäurecholesterylester K 130 Chol 217

4-(4-Pentenyl)benzoesäurecholesterylester K 118 $S_A$ 125 Chol 194 I

4-(5-Hexenyl)benzoesäurecholesterylester K 108 $S_A$ 128 Chol 197 I

4-Allylbenzoesäure-(4-methoxyphenyl)ester K 85 I

4-(3-Butenyl)benzoesäure-(4-methoxyphenyl)ester K 56 (N 40) I

4-(4-Pentenyl)benzoesäure-(4-methoxyphenyl)ester K 49 I

4-(5-Hexenyl)benzoesäure-(4-methoxyphenyl)ester K 59 I

4-Allylbenzoesäure-(4-cyanophenyl)ester K 110 I

4-(3-Butenyl)benzoesäure-(4-cyanophenyl)ester K 92 I

4-(4-Pentenyl)benzoesäure-(4-cyanophenyl)ester K 44 I

4-(5-Hexenyl)benzoesäure-(4-cyanophenyl)ester K 63 I

4-Allylbenzoesäure-(4-chlorphenyl)ester K 54-56 I

4-(3-Butenyl)benzoesäure-(4-chlorphenyl)ester K 50-51 I

4-(4-Pentenyl)benzoesäure-(4-chlorphenyl)ester K 47 I

4-(5-Hexenyl)benzoesäure-(4-chlorphenyl)ester K 54 I

4-Allylbenzoesäure-(4-biphenylyl)ester K 146 I

4-(3-Butenyl)benzoesäure-(4-biphenylyl)ester K 108 I

4-(3-Butenyl)benzoesäure-(4-propylphenyl)ester K 24 I

4-(4-Pentenylbenzoesäure-(4-biphenylyl)ester K 127-128 I

4-(5-Hexenylbenzoesäure-(4-biphenylyl)ester K 114-118 I

4-(3-Butenyl)benzoesäure-(4-octyloxyphenyl)ester K 42 N 61 I

4-(3-Butenyl)benzoesäure-(4-cyanobiphenylyl)ester K 123 N 261 I

4-((4-Chlorphenyl)carbonyloxyphenyl)benzoesäure-(5-hexenyl)-ester K 52 I

4-((4-Biphenylyl)carbonyloxyphenyl)benzoesäure-(5-hexenyl)-ester K 98 I

4-(3-Butenyl)benzoesäure-(4-trimethylsilylbutylphenyl)ester Kp. bei 0,2 mbar 203-204 °C

Tabelle 2

Ausgangsstoffe der Formel (14) bzw. (15): 4-(ω-Alkenyl)phenolester

4-Chlorbenzoesäure-(4-(3-butenyl)phenyl)ester K 67 I

4-Biphenylylcarbonsäure-(4-(3-butenyl)phenyl)ester K 97 N 107 I

4-Methoxybenzoesäure-(4-(3-butenyl)phenyl)ester K 70 I

4-Biphenylylcarbonsäure-(4-allylphenyl)ester K 114 I

4-Methoxybenzoesäure-(4-allylphenyl)ester K 63 I

Tabelle 3

Gemäß Verfahren 1 hergestellte erfindungsgemäße cyclische Siloxane

Cyclopentasiloxan, pentamethyl-penta(4-(cholesteryloxycarbonyl)phenylpropyl)-, $T_G$ 82 $S_A$ 246 I.

Cyclopentasiloxan, pentamethyl-penta(4-(cholesteryloxycarbonyl)phenylbutyl)-, $T_G$ 65 $S_A$ 240 I.

Cyclopentasiloxan, pentamethyl-penta(4-(cholesteryloxycarbonyl)phenylpentyl)-, $T_G$ 51 $S_A$ 255 I.

Cyclopentasiloxan, pentamethyl-penta(4-(cholesteryloxycarbonyl)phenylhexyl)-, $T_G$ 40 $S_A$ 248 I.

Cyclopentasiloxan, pentamethyl-penta(4-(4-methoxyphenyloxycarbonylphenyl)butyl)-, $T_G$ 10 N 5

Cyclopentasiloxan, pentamethyl-penta (4-(4-cyanophenyloxycarbonylphenyl)propyl)-, $T_G$ 36 N 84 I.

Cyclopentasiloxan, pentamethyl-penta(4-(4-cyanophenyloxycarbonylphenyl)butyl)- ,K 84 N 100 I.

Cyclopentasiloxan, pentamethyl-penta-(4-(4-cyanophenyloxycarbonylphenyl)hexyl)-, K 54 $S_A$ 105 I.

Cyclopentasiloxan, pentamethyl-penta-(4-(4-chlorphenyloxycarbonylphenyl)butyl)-, $T_G$50$S_E$ 94 $S_A$ 115 I.

Cyclopentasiloxan, pentamethyl-penta-(4-(4-chlorphenyloxycarbonylphenyl)hexyl)-, $T_G$ 2 $S_E$33 $S_A$ 120 I

Cyclopentasiloxan, pentamethyl-penta-(4-biphenylyloxycarbonylphenylbutyl)-, K 145 ($T_G$ 93 N 140) I

Cyclopentasiloxan, pentamethyl-penta-(4-biphenylyloxycarbonylphenylpentyl)-, K 120 N 142 I.

Cyclopentasiloxan, pentamethyl-penta-(4-(4-biphenylylcarbonyloxy)phenylbutyl)-, $T_G$ 46 $S_X$ 117 $S_C$ 133 N 146 I

Cyclopentasiloxan, pentamethyl-penta-(4-(4-methoxyphenylcarbonyloxy)phenylbutyl)-, $T_G$ -3 N 65 I

Cyclopentasiloxan, pentamethyl-penta-(4-(4-biphenylylcarbonyloxy)phenylpropyl)-, $T_G$ 30 $S_B$ 57 $S_A$ 127 N 136 I

Cyclopentasiloxan, pentamethyl-penta-(4-(4-methoxyphenylcarbonyloxy)phenylpropyl)-, $T_G$ 7 N

Cyclopentasiloxan, pentamethyl-penta-(4-(4-cyanobiphenylyloxycarbonylphenyl)butyl)-, $T_G$ 48 $S_B$ 112 $S_A$ 144 N > 300 I

Cyclopentasiloxan, pentamethyl-penta(4-(4-cyanobiphenylyloxycarbonylphenyl)hexyl)-, $T_G$ 34 $S_B$ 112 $S_A$ > 300 I.

Cyclopentasiloxan, pentamethyl-penta (4-(4-chlorphenylcarbonyloxy)phenylcarbonyloxyhexyl)-, $T_G$ 5 $S_E$ 43 $S_B$ 83-90 $S_A$ 96-114 I.

Cyclopentasiloxan, pentamethyl-penta(4-(4-biphenylylcarbonyloxy)phenylcarbonyloxyhexyl)-, $T_G$ 16 $S_A$, K 64 $S_A$ 176-192 I.

Cyclopentasiloxan, pentamethyl-(4-(cholesteryloxycarbonyl)-phenyloxyhexyl)$_{1,25}$-[4-(biphenylyloxycarbonyl)phenyloxyhexyl]$_{1,25}$[4-(cholesteryloxycarbonyl)phenylbutyl)$_{1,25}$-(4-(biphenylyloxycarbonyl)phenylbutyl)$_{1,25}$. $T_G$ 41 $S_C$ 63-66 $S_A$ 173-177 Chol 201 I.

Cyclopentasiloxan, pentamethyl-(4-(cholesteryloxycarbonyl)phenylbutyl)$_{2,5}$-(4-(biphenylyloxycarbonyl)phenylbutyl)$_{2,5}$ $T_G$ 44 $S_A$ 184 Chol 207 I.

Cyclopentasiloxan, pentamethyl-(4-(cholesteryloxycarbonyl)-phenylpropyl)$_{2,5}$(4-(4-methoxyphenyloxycarbonyl)phenylbutyl)$_{2,5}$ $T_G$ 38 Chol 176 I.

Cyclopentasiloxan, pentamethyl-(4-(cholesteryloxycarbonyl)-phenylbutyl)$_{2,5}$(4-(4-methoxyphenyloxycarbonyl)phenylpropyl)$_{2,5}$
$T_G$ 37 Chol 170 I.
Absorptionsmaximum bei 396 nm.
Cyclopentasiloxan, pentamethyl-(4-(cholesteryloxycarbonyl)-phenylpropyl)$_3$-(4-(4-methoxyphenyloxycarbonyl)phenylbutyl)$_2$
Absorptionsmaximum bei 436 nm. $T_G$ 47 Chol 196 I.
Cyclopentasiloxan, pentamethyl-(4-(cholesteryloxycarbonyl)-phenylpropyl)$_{1,75}$-(4-(4-methoxyphenyloxycarbonyl)phenylbutyl)$_{3,25}$
Absorptionsmaximum bei 460 nm. $T_G$ 26 Chol 141 I.
Cyclopentasiloxan, pentamethyl-(4-(cholesteryloxycarbonyl)-phenylpropyl)$_{0,75}$(4-(4-methoxyphenyloxycarbonyl)phenylbutyl)$_{4,25}$
Absorptionsmaximum bei 640 nm. $T_G$ 15 Chol 84 I.
Cyclotetrasiloxan, tetramethyl-(4-(cholesteryloxycarbonyl)-phenylpropyl)$_2$-(4-(4-methoxyphenyloxycarbonyl)phenylbutyl)$_2$.
$T_G$ 36 Chol 162-163 I.
Absorptionsmaximum bei 460 nm.
Cyclohexasiloxan, hexa -[(4-butylphenyl)iminomethyl-4-phenylbutyl]-hexamethyl K 56-58 ik 75-103 i .

Beispiele

Beispiel 1

a) Herstellung von 4-(ω-Alkenyl)-1-halogenbenzolen

Eine Lösung von 294 g (2 Mol) 1.4-Dichlorbenzol in 500 ml wasserfreiem Tetrahydrofuran wurde unter Stickstoff bei 80 °C zu einer gerührten Suspension von 48,6 g (2,0 Mol) Magnesiumspänen innerhalb von 110 min zugetropft. Anschließend wurde noch 2 Stunden auf 80-84 °C erhitzt, dann vom überschüssigen Magnesium dekantiert und diese Lösung der Grignardverbindung bei 80 °C innerhalb von 30 min zu einer gerührten Lösung von 194 g (1,8 Mol) 6-Brom-1-hexen (Fluka GmbH, 7910 Neu-Ulm) in 200 ml Tetrahydrofuran zugetropft. Danach wurde noch 4 Stunden bei 80 °C gerührt und das Gemisch auf Eis gegossen. Nach Ansäuern mit Salzsäure wurde dreimal mit einem 1:1-Gemisch Diethylether-/Methyltert.butylether extrahiert, die Etherfraktionen mit Aktivkohle durchgerührt und über Natriumsulfat getrocknet. Nach Einengen des Filtrats wurde der Rückstand fraktioniert. Bei einem Druck von 13 hPa und einer Temperatur von 116-118 °C wurden 156 g (entsprechend 40 % Ausbeute der Theorie) an 4-(5-Hexenyl)-1-chlorbenzol erhalten. Auf gleiche Weise ist beispielsweise auch 4-(8-Nonenyl)-1-chlorbenzol (Kp. bei 0,3 hPa 87 °C)-herstellbar.

b) Herstellung von 4-(ω-Alkenyl)-benzoesäuren

Zu einer vorgelegten Menge von 19,5 g (0,8 Mol) Magnesiumspänen wurde eine Startmenge von insgesamt 137 g (0,7 Mol) 4-(5-Hexenyl)-1-chlorbenzol in 170 ml Tetrahydrofuran bei 80 °C zugegeben. Nach dem Anspringen der Reaktion wurde der Rest der Lösung unter Rühren bei 80-82 °C innerhalb von 2,5 Stunden zugetropft und anschließend 4 Stunden bei 80-84 °C weitergerührt. 150 ml Tetrahydrofuran

wurden bei 10 °C mit $CO_2$ gesättigt und dann unter Rühren die vom überschüssigen Magnesium dekantierte Grignardlösung bei 5-15 °C zugetropft und weiter $CO_2$ eingeleitet. Nach Ende der Zugabe und einer Nachreaktionszeit von 2 Stunden wurde das Gemisch auf Eis gegossen, mit Salzsäure angesäuert und die entstandene Emulsion dreimal mit Methyl-tert. butylether extrahiert. Nach Waschen, Trocknen und Einengen der organischen Phase wurden 73 g (47,6 % d.Th.) an 4-(5-Hexenyl)benzoesäure erhalten (Umkristallisieren aus Petrolether ergibt ein Produkt mit einem Schmelzbereich von 79-82 °C).
Durch übliche Umsetzung dieser Säure mit Thionylchlorid in Toluol mit Dimethylformamid als Katalysator wurde mit 65,6 % d. Theorie das entsprechende Säurechlorid (Kp. bei 13 mb 118 °C) erhalten. Durch übliche Umsetzung dieses Säurechlorids mit 4-Hydroxybiphenyl mit Triethylamin als Säurefänger wurde mit 61,8 % Ausbeute der 4-(5-Hexenyl)benzoesäure-(4-biphenyl)estererhalten, der einen Schmelzbereich von 114-118 °C aufweist.

c) Herstellung des Cyclopentasiloxanaddukts

5,7 g (15,3 mMol) dieses Esters, gelöst in 35 g Toluol, 0,9 g (0,3 mMol) Pentamethylcyclopentasiloxan (ABCR GmbH, 7500 Karlsruhe) und 0,8 ml einer 0,5 %igen Lösung von Dicyclopentadienylplatindichlorid in Dichlormethan wurden zusammen auf Rückfluß erhitzt und 60 min dabei gehalten. Die erhaltene Lösung wurde zur Entfernung des Pt-Katalysators über eine kurze Kieselgelsäule gereinigt. Das gesuchte Produkt wurde mit 200 ml Ethanol ausgefällt, filtriert und noch einmal in reinem Toluol aufgelöst. Nach erneuter Fällung, Filtration und Trocknung wurden 3,1 g (47 % d.Th.) an Pentamethyl-penta-(4-biphenylyloxycarbonylphenylhexyl)cyclopentasiloxan erhalten, das folgendes Phasenverhalten zeigt: $S_I$ 117 $S_C$ 133 N 146-147 I.

Beispiel 2

Herstellung von Pentamethyl-penta-(4-(4-biphenylyl carbonyloxy)phenylbutyl)-cyclopentasiloxan

a) Nach Y.P. Yardley und H. Fletcher, Synthesis 1976, S. 244, wurde aus Formaldehyddimethylacetal und 4-Bromphenol 4-Methoxymethoxy-1-brombenzol hergestellt. Der Siedepunkt dieses Derivats bei 0,1 hPa liegt bei 54-56 °C, die Ausbeute beträgt 49 % der Theorie.
4,6 g (0,19 Mol) Magnesiumspäne wurden unter Stickstoff mit absolutem Tetrahydrofuran befeuchtet, auf 60 °C erwärmt und mit einigen Tropfen Ethyljodid als Starter versetzt. Nach dem Anspringen der Reaktion wurde die Restmenge von insgesamt 35 g (0,16 Mol) der Bromverbindung, gelöst in 150 ml Tetrahydrofuran, so zudosiert, daß das Gemisch am Sieden blieb und anschließend wurde weitere 2,5 Stunden unter Rückfluß erhitzt Danach wurde eine katalytische Menge einer Lösung von Dilithiumtetrachlorocuprat (mit einem 25 %-Anteil an Dilithiumtetrabromcuprat) sowie eine Lösung von 16,2 ml (0,16 Mol) 4-Brom-1-buten in 200 ml THF zugegeben. Das Gemisch wurde 16 Stunden auf Rückfluß erhitzt, dann abgekühlt und auf Eis gegossen. Nach Ansäuern und Phasentrennung wurde die wäßrige Phase 2 x mit 400 ml Methyltert.-Butylether extrahiert. Die organischen Phasen wurden getrocknet und eingeengt. Der Rückstand wurde bei vermindertem Druck fraktioniert. Bei einer Siedetemperatur von 118-120 °C und einem Druck von 15 hPa wurden 16,5 g (entsprechend 53,6 % der Theorie) an 4-(Methoxymethoxy)-1-(3-butenyl)benzol erhalten.
Durch Erwärmen dieses Derivats mit 2n Essigsäure auf 95-100 °C (40 Stunden) wurde das 4-(3-Butenyl)phenol freigesetzt. Erhalten wurden bei einem Druck von 16 hPa und 130-140 °C 20,8 g 4-(3-Butenyl)phenol (42,1 % der Theorie).
b) Durch übliche Veresterung dieses Phenolderivats mit käuflichem Biphenyl-4-carbonsäurechlorid (Fa. Janssen Chimica, 4057 Brüggen 2) in Toluol als Lösungsmittel und mit Triethylamin als Säurefänger wurde 4-Biphenylylcarbonsäure-(4-(3-butenyl)phenyl)ester in Form farbloser Blättchen in einer Ausbeute von 76,2 % der Theorie erhalten. Der Ester zeigt folgendes Phasenverhalten: K 97 N 107 I.
c) Durch Addition des erhaltenen Esters an Pentamethylcyclopentasiloxan gemäß der Verfahrensweise in Beispiel 1 (c) wurde das gesuchte Produkt in fast quantitativer Ausbeute erhalten. Folgende Phasen wurden festgestellt:
$T_G$ 46 $S_X$ 125 $S_B$ 137 $S_A$ 170 I.

Beispiel 3

Herstellung von Tetramethyl-di(4-(cholesteryloxycarbonyl)-phenylpropyl)-di-(4-(4-methoxyphenyloxycarbonyl)phenylbutylcyclotetrasiloxan

In analoger Weise, wie in Beispiel 1 a bzw. b beschrieben, wurden 4-(3-Butenyl)benzoesäure-(4-methoxyphenylester (Fp. 54 °C) und 4-Allylbenzoesäurecholesterylester (K 139 Chol 203 I) hergestellt und in gleichmolaren Mengen, wie in Beispiel 1 c beschrieben, an Tetramethylcyclotetrasiloxan addiert. Die Substanz zeigte nach Reinigung folgendes Verhalten: Glastemperatur ($T_G$) 36 Chol 162-163 I. Das Absorptionsspektrum zeigte bei 460 nm ein Maximum.

Beispiel 4

Herstellung von Hexa[(4-Butylphenyl)iminomethyl-4-phenylbutyl)]-hexamethylcyclohexasiloxan.

a) Zunächst wurde nach P.E. Peterson et al. J.Org.Chem. 33, 972 (1968) 4-(3-Butenyl)-1-brombenzol hergestellt. 133 g (0,63 Mol) dieses Produkts wurden in 110 ml Tetrahydrofuran gelöst und das Gemisch innerhalb 3 Stunden bei 75-95 °C unter Rühren zu 17 g (0,7 Mol) Magnesiumspänen zugetropft. Danach wurde abgekühlt, vom Magnesium abdekantiert und die Grignard-Lösung innerhalb von 2 Stunden bei 5-10 °C zu einer Lösung von 57,7 g (0,8 Mol) Dimethylformamid in 900 ml Tetrahydrofuran zugetropft und danach eine weitere Stunde bei 35 °C gehalten. Nach Abkühlen, Hydrolyse und Aufarbeitung des Gemisches wurde die organische Phase über eine kurze Kolonne fraktioniert. Bei einem Druck von 16 mbar und einem Siedepunkt von 124 °C wurden 56,2 g an 4-(3-Butenyl)benzaldehyd (55,7 % Ausbeute) erhalten.

b) 26,0 g (0,1 Mol) dieses Aldehyds und 14,9 g (0,1 Mol) käufliches 4-Butylanilin wurden in 200 ml Toluol gelöst, 0,3 g 4-Toluolsulfonsäure als Katalysator zugegeben und das Gemisch 90 min auf Rückfluß erhitzt. Das entstandene Wasser wurde über einen Abscheider azeotrop abgetrennt. Der Reaktionsrückstand wurde fraktioniert. Das gesuchte Imin wies bei 0,02 mbar einen Siedepunkt von 170 °C auf. Erhalten wurden nach Umkristallisieren auf Ethanol 19,1 g Substanz (65,6 % der Theorie).

c) 1,6 g (4,5 mMol) Hexamethylcyclohexasiloxan und 8,7 g (30 mMol) des Imins nach b) wurden in 10 ml Toluol unter Zuhilfenahme von 0,4 ml einer 0,5 % Platinkatalysatorlösung analog Beispiel 1 c bei 50-90 °C umgesetzt (60 min). Nach zweimaligem Umfällen mit Ethanol wurden 6,5 g (68 % der Theorie) des gesuchten Addukts erhalten. Es zeigt folgendes Phasenverhalten: K,I 56 $S_A$ 88-103 I.

Beispiel 5

Vergleichsbeispiel

Mit Pentamethylcyclopentasiloxan gleicher Qualität wurden, wie in Beispiel 1 c beschrieben, 4-Allyloxybenzoesäure-(4-propylphenyl)ester (Schmelzpunkt 53-55 °C) sowie 4-(3-Butenyl)benzoesäure-(4-propylphenyl)-ester (Schmelzpunkt 24 °C) bei gleichen Reaktionsbedingungen umgesetzt. Bei beiden Substanzen wurde zunächst das Lösungsmittel entfernt und von den ungereinigten Rückständen $^1$H-NMR Spektren angefertigt.

Das Addukt des 4-(3-Butenyl)benzoesäureesters zeigt die zu erwartenden Signale in klarer Auflösung; die Integrale der einzelnen Signale entsprechen einander.

Das Addukt des 4-Allylbenzoesäureesters zeigt vielfach aufgespaltene Einzelsignale (durch Nebenprodukte verursacht). Die Höhen der Integrale der einzelnen Signale weichen bis zu 20 % voneinander ab. Ein Vergleich der Hochdruck-Gelpermeations-Chromatogramme zeigt, daß das 4-Allyloxybenzoesäureester-Addukt mehr als doppelt so viel Verunreinigungen durch Nebenprodukte enthält als das 4-(3-Butenyl)-benzoesäureester-Addukt (kein Sauerstoff im Spacer).

Beide Rohprodukte wurden in Toluol gelöst und zur Reinigung über gleich lange Säulen aus Kieselgel chromatographiert. Das 4-(3-Butenyl)benzoesäureesteraddukt wies danach 3,2 % Verunreinigungen auf, das 4-Allyloxybenzoesäureaddukt dagegen 28,7 % Verunreinigungen. Der gegenüber dem Rohprodukt noch erhöhte Anteil an Verunreinigungen wird durch das zur Chromatographie verwandte Kieselgel verursacht, dessen Oberflächen-Wasser trotz des aprotischen Laufmittels genügt, um in größerem Ausmaß Hydrolyse zu verursachen.

Beispiel 6

Vergleichsbeispiel

Ein nach EP 60335 hergestelltes 1:1 Mischaddukt von 4-(Propen-2-oxy)benzoesäurecholesterylester und 4-(Propen-2-oxy) phenylbenzoesäure-4'-phenyl-phenylester an Pentamethylcyclopentasiloxan zeigt bei 632-580 nm einen breiten Absorptionsbereich (52 nm), dessen Verbreiterung durch Gehalte an Nebenprodukten verursacht werden. Ein vergleichbares, erfindungsgemäßes 1:1-Addukt von 4-(3-Butenyl)-benzoesäurecholesterylester und 4-(2-Propen-1-yl)benzoesäure-4-methoxyphenylester an Pentamethylcyclopentasiloxan weist bei 380-405 nm einen wesentlich schmäleren Absorptionsbereich (25 nm) auf.

Beispiel 7

Herstellung nach verfahren 2 In 5 ml trockenem Toluol wurden 0,65 g (1,89 mmol) 1.2.3.4-Tetravinyl-1.2.3.4-tetramethylcyclotetrasiloxan, 2,50 g (7,53 mmol) 4-Dimethylsilylbenzoesäure-4-biphenylester und 80 mg (2 µmol Pt) 1 %ige Dicyclopentadienylplatindichloridlösung in Dichlormethan 30 min. unter Rückfluß erhitzt. Das Reaktionsprodukt wurde mit Methanol aus dem Toluol ausgefällt und zur Reinigung über Kieselgel chromatographiert. Man erhielt in 78 %iger Ausbeute 1.2.3.4-Tetrakis-(2-(4-biphenyloxycarbonylphenylen-4-dimethylsilylen)ethy 1)-1.2.3.4-tetramethylcyclotetrasiloxan, Phasen: K 82-85 i.

Analog wurde dargestellt:
1.2.3-Tris-(2-(cholesteryloxycarbonylphenylen-4-dimethylsilylen)ethyl)-1.2.3-trimethylcyclotrisiloxan Phasen: G 63 $s_C$ 141-157 i;
1.2.3.4-Tetrakis-(2-(cholesteryloxycarbonylphenylen-4-dimethylsilylen)ethyl)-1.2.3.4-tetramethylcyclotetrasiloxan, Phasen: G 67 $s_C$ 164 i;
1.2.3-Tris-(2-(4-biphenyloxycarbonylphenylen-4-dimethylsilylen)ethyl)-1.2.3-trimethylcyclotrisiloxan, Phasen: K 88 (G 46) i;
1-(2-(Cholesteryloxycarbonylphenylen-4-dimethylsilylen)ethyl)-2.3-bis-(2-(4-biphenyloxycarbonylphenylen-4-dimethylsilylen)ethyl)-1.2.3-trimethylcyclotrisiloxan, Phasen: G 41 $s_C$ 86 i;
1.2-Bis-(2-(cholesteryloxycarbonylphenylen-4-dimethylsilylen)ethyl)-3-(2-(4-biphenyloxycarbonylphenylen-4-dimethylsilylen)ethyl)-1.2.3-trimethylcyclotrisiloxan, Phasen: G 47 $s_C$ 126 i;
1.2.3.4,Pentakis-(2-(cholesteryloxycarbonylphenylen-4-dimethylsilylen)ethyl)-1.2.3.4.5-pentamethylcyclopentasiloxan, Phasen: G 80 $s_C$ 179-196 i;
1.2.3.Tris-(2-(cholesteryloxycarbonyphenylen-4-dimethylsilylen)ethyl)-4-(2-(4-biphenyloxycarbonylphenylen-4-dimemethylsilylen)ethyl)-1.2.3.4-tetramethylcyclotetrasiloxan, Phasen: G 61 $s_A$ 146-153 i;
1.2-Bis-(2-(cholesteryloxycarbonylphenylen-4-dimethylsilylen)ethyl)-3.4-bis-(2-(4-biphenyloxycarbonylphenylen-4-dimethylsilylen)ethyl)-1.2.3.4-tetramethylcyclotetrasiloxan, Phasen: G 50 s 105-120 i;
1-(2-(Cholesteryloxycarbonylphenylen-4-dimethylsilylen)ethyl)-2.3.4-tris-(2-(4-biphenyloxycarbonylphenylen-4-dimethylsilylen)ethyl)-1.2.3.4-tetramethylcyclotetrasiloxan, Phasen: G 39 s 84-88 i;
1.2-Bis-(2-(cholesteryloxycarbonylphenylen-4-dimethylsilylen)ethyl)-3.4-bis-(2-(4-methoxyphenyloxycarbonylphenylen-4-dimethylsilylen)ethyl)-1.2.3.4-tetramethylcyclotetrasiloxan, Phasen: G 40 s 58 i
1.2.3.4-Tetrakis-(2-(4-cyanophenylenoxycarbonylphenylen-4-dimethylsilylen)ethyl)-1.2.3.4-tetramethylcyclotetrasiloxan, Phasen: G 37 i.
1.2.3.4-Tetrakis-[2-(4,4'-cyanobiphenylyloxycarbonylphenylen-4-dimethylsilylen)ethyl]-1.2.3.4-tetramethylcyclotetrasiloxan; Phasen: G 52 $s_C$ 214 $s_A$ 214-228 i.

**Patentansprüche**

1. Organocyclosiloxane der Formel (5)

$[RXSiO]_n$ (5),

welche mindestens eine an ein Siliciumatom gebundene Gruppe der Formel (1) enthalten

$-(CH_2)_x-R''[-L-A-]y-(L)_z-T$ (1),

worin

**X** gleiche oder verschiedene Reste der Bedeutung von R oder Reste der Formel (1),

**n** eine ganze Zahl im Wert von mindestens 3,

**x** eine ganze Zahl im Wert von mindestens 2, vorzugsweise von 2 bis 10,

**R''** eine chemische Bindung oder einen zweiwertigen Rest der Formel -COO-, -OOC-, $-CH_2-CH_2-$, -CH = CH-, -C≡C-, -CH = N-, -N = CH- oder $-Si(R)_2-$, wobei die Reste

**R** gleiche oder verschiedene, gegebenenfalls substituierte Kohlenwasserstoffreste mit 1 bis 18 Kohlenstoffatomen sind,

**L** jeweils gleiche oder verschiedene, gegebenenfalls durch mindestens einen Rest **Q** in 2-, 3-, 5- und/oder 6-Stellung substituierte 1,4-Phenylen- oder 1,4-Cyclohexylenreste, 2,5- oder 3,6-Pyridindiyl-, 2,5-Pyrimidindiyl-, 2,5-Pyridazindiyl-, 2,5-Triazindiyl-, 3,6-Tetrazindiyl-, 2,5-Dioxandiyl-, 2,5-Tetrahydrofurandiyl-, 1,3,4-Thiadiazol-2,5-diyl-,1,4-Bicyclo[2.2.2]-octandiylreste,

**Q** gleiche oder verschiedene Reste, nämlich Wasserstoff-, Fluor- oder Chloratome, Cyano-, Methyl- oder Trifluormethylgruppen,

**A** gleiche oder verschiedene zweiwertige Reste der Bedeutung **R''** oder der Formel $-CH_2-O-$ oder $-O-CH_2-$, $-CH_2-CH_2-$, -CH = N- oder -N = CH-,

**y** eine ganze Zahl im Wert von 0 bis 10, vorzugsweise von 0 bis 2,

**z** eine ganze Zahl im Wert von 0 bis 10, vorzugsweise von 0 bis 2, mit der Maßgabe, daß die Summe **y+z** mindestens 1 beträgt,

**T** einen Cholesterylrest oder einen gegebenenfalls substituierten Kohlenwasserstoffrest mit 1 bis 18 Kohlenstoffatomen, wobei die gegebenenfalls vorhandenen Substituenten vorzugsweise Halogenatome, Cyanogruppen und/oder Kohlenwasserstoffoxygruppen mit 1 bis 10 Kohlenstoffatomen sind.

**2.** Verfahren zur Herstellung von Cyclosiloxan gemäß Anspruch 1, wobei cyclisches Siloxan mit mindestens einem direkt an Silicium gebundenem Wasserstoff-atom mit Verbindung der Formel (14) umgesetzt wird

$H_2C = CH-(CH_2)_{(x-2)}-R''-[-L-A-]_y-(L)_z-T$ (14),

vorzugsweise in Gegenwart von mindestens einem Metall der Platingruppe und/oder dessen Verbindungen, wobei in der oben genannten Formel (14) R'', L, A, T, x, y, z und Q die in Anspruch 1 angegebenen Bedeutungen haben.

**3.** Verfahren zur Herstellung von Cyclosiloxan gemäß Anspruch 1, wobei cyclisches Siloxan mit mindestens einer direkt an Silicium gebundenen Alkenylgruppe der Formel

$-(CH_2)_{(x-2)}-CH = CH_2$ (16)

mit Verbindung der Formel (17) umgesetzt wird

$H-R''-[-L-A-]_y-(L)_z-T$ (17),

vorzugsweise in Gegenwart von mindestens einem Metall der Platingruppe und/oder dessen Verbindungen, wobei in den oben genannten Formeln (16) und (17), R'' eine Gruppe der Formel $-Si(R)_2-$ bedeutet und L, A, T, x, y, z und Q die in Anspruch 1 angegebenen Bedeutungen haben.

**4.** Verwendung der cyclischen Siloxane gemäß Anspruch 1 oder der nach dem Verfahren gemäß Anspruch 2 oder 3 herstellbaren Verbindungen in Anzeigevorrichtungen.

## Claims

**1.** Organocyclosiloxanes of the formula (5)

$[RXSiO]_n$ (5)

which contain at least one group of the formula (1) bonded to a silicon atom

$-(CH_2)_x-R''-[-L-A-]_y-(L)_z-T$ (1) ,

in which

**X** are identical or different radicals as defined for R or radicals of the formula (1),

**n** is an integer having a value of at least 3,

**x** is an integer having a value of at least 2, preferably having a value of from 2 to 10,

**R''** is a chemical bond or a divalent radical of the formula -COO-, -OOC-, $-CH_2-CH_2-$, -CH = CH-, -C≡C-, -CH = N-, -N = CH- or $-Si(R)_2-$, where the radicals

**R** are identical or different, optionally substituted hydrocarbon radicals having 1 to 18 carbon atoms,

**L** are in each case identical or different 1,4-phenylene or 1,4-cyclohexylene radicals which are optionally 2-, 3-, 5- and/or 6-substituted by at least one radical **Q**, or are 2,5- or 3,6-pyridinediyl, 2,5-pyrimidindiyl, 2,5-pyridazinediyl, 2,5-triazinediyl, 3,6-tetrazinediyl, 2,5-dioxanediyl, 2,5-tetrahydrofurandiyl, 1,3,4-thiadiazole-2,5-diyl or 1,4-bicyclo[2.2.2]octanediyl radicals,

**Q** are identical or different radicals, namely hydrogen, fluorine or chlorine atoms or cyano, methyl or trifluoromethyl groups,

**A** are identical or different divalent radicals as defined for **R''** or of the formula $-CH_2-O-$, $-O-CH_2-$, $-CH_2-CH_2-$, -CH = N- or -N = CH-,

**y** is an integer having a value of from 0 to 10, preferably from 0 to 2,

**z** is an integer having a value of from 0 to 10, preferably from 0 to 2, with the proviso that the sum **y+z** is at least 1, and

**T** is a cholesteryl radical or an optionally substituted hydrocarbon radical having 1 to 18 carbon atoms, the substituents optionally present preferably being halogen atoms, cyano groups and/or hydrocarbon oxy groups having 1 to 10 carbon atoms.

**2.** Process for the preparation of a cyclosiloxane according to claim 1, in which a cyclic siloxane containing at least one hydrogen atom bonded directly to silicon is reacted with a compound of the formula (14)

$H_2C = CH-(CH_2)_{(x-2)}-R''-[-L-A-]_y-(L)_z-T$ (14),

preferably in the presence of at least one platinum-group metal and/or compounds thereof, where, in the abovementioned formula (14), R'', L, A, T, x, y, z and Q are as defined in Claim 1.

**3.** Process for the preparation of a cyclosiloxane according to Claim 1, in which a cyclic siloxane containing at least one alkenyl group of the formula

$-(CH_2)_{(x-2)}-CH = CH_2$ (16),

bonded directly to silicon is reacted with a compound of the formula (17)

$H-R''-[-L-A-]_y-(L)_z-T$ (17),

preferably in the presence of at least one platinum-group metal and/or compounds thereof, where, in the abovementioned formulae (16) and (17), R'' is a group of the formula $-Si(R)_2-$ and L, A, T, x, y, z and Q are as defined in Claim 1.

**4.** The use of a cyclic siloxanes according to Claim 1, or the compounds which can be prepared by the process according to Claim 2 or 3 in display devices.

**Revendications**

**1.** Organocyclosiloxanes de formule (5) :

$[RXSiO]_n$ (5)

qui contiennent au moins un groupe, fixé sur un atome de silicium, de formule (1)

$-(CH_2)_x-R''-[-L-A-]_y-(L)_z-T$ (1)

dans laquelle

- X représente des restes identiques ou différents ayant le sens de R ou représente des restes de formule (1),
- n est un nombre entier valant au moins 3,
- x est un nombre entier valant au moins 2, et valant avantageusement de 2 à 10,
- R'' représente une liaison chimique ou un reste divalent de formule -COO-, -OOC-, $-CH_2CH_2-$, -CH = CH-, -C≡C-, -CH = N-, -N = CH- ou $-Si(R)_2-$, les restes
- R représentant des restes hydrocarbonés identiques ou différents, éventuellement substitués comportant 1 à 18 atomes de carbone;
- L chaque fois identiques ou différents, représentant des restes 1,4-phénylène ou 1,4-cyclohexylène, éventuellement substitués par au moins un reste Q en position 2, 3, 5 et/ou 6, ou bien L représente un reste 2,5 ou 3,6-pyridinediyle, 2,5-pyrimidinediyle, 2,5-pyridazinediyle, 2,5-triazininediyle, 3,6-tétrazinediyle, 2,5-dioxannediyle, 2,5-tétrahydrofurannediyle, 1,3,4-thiadiazole-2,5-diyle, 1,4-bicyclo[2,2,2]octanediyle,
- Q représente les restes identiques ou différents, à savoir des atomes d'hydrogène, de fluor ou de chlore, ou des groupes cyano, méthyle ou trifluorométhyle,
- A représente des restes divalents identiques ou différents ayant le sens de R'' ou ayant pour formule $-CH_2-O-$ ou $-O-CH_2-$, $-CH_2-CH_2-$, -CH = N- ou -N = CH-,
- y est un nombre entier valant 0 à 10, avantageusement 0 à 2,
- z est un nombre entier valant 0 à 10, avantageusement 0 à 2, à la condition que la somme (y + z) vale au moins 1,
- T représente un reste cholestéryle ou un reste hydrocarboné éventuellement substitué comportant 1 à 18 atomes de carbone, les substituants éventuellement présents étant avantageusement des atomes d'halogène, des groupes cyano et/ou des groupes oxyhydrocarbonés comportant 1 à 10 atomes de carbone.

**2.** Procédé pour préparer le cyclosiloxane selon la revendication 1, selon lequel on fait réagir du siloxane cyclique, comportant au moins un atome d'hydrogène directement fixé sur du silicium, avec un composé de formule (14)

$H_2C = CH-(CH_2)_{(x-2)}-R''-[-L-A-]_y-(L)_z-T$ (14),

en opérant avantageusement en présence d'au moins un métal du groupe ou de la famille du platine et/ou ses composés, et, dans la formule (14) précité, les symboles R'', L, A, T, x, y, z et Q ont les sens indiqués à la revendication 1.

**3.** Procédé de préparation d'un cyclosiloxane selon la revendication 1, selon lequel on fait réagir du siloxane cyclique comportant au moins un groupe alcényle directement fixé sur du silicium, de formule

$-(CH_2)_{(x-2)}-CH = CH_2$ (16)

avec un composé de formule (17)

$H-R''-[-L-A-]_y-(L)_z-T$ (17)

en opérant avantageusement en présence d'au moins un métal de la famille du platine et/ou de ses composés, et, dans les formules (16) et (17) précitées, R'' représente un groupe de formule $-Si(R)_2-$ et les symboles L, A, T, x, y, z et q ont les sens indiqués à la revendication 1.

**4.** Utilisation des siloxanes cycliques selon la revendication 1, ou des composés préparés selon le procédé de la revendication 2 ou 3, dans des dispositifs d'affichage.